# EUROPEAN PATENT APPLICATION

(11) **EP 1 675 397 A1**
(43) Date of publication of application: **28.06.2006**
(21) Application number: 04293080.0
(22) Date of filing: 22.12.2004
(51) Int. Cl.: H04N 7/173

(54) **Interactive video communication system with chat**

(71) Applicant: ALCATEL, 75008 Paris (FR)
(72) Inventor: Baekeland, Rony Alfons Maria, B-2000 Antwerpen (BE)
(74) Representative: Narmon, Gisèle Marie Thérèse

(57) **Abstract**

Interactive video communication system (1) comprising client systems (2) with transmitters (10) for transmitting client signals to further client systems (3) and first receivers (11) for receiving video signals from sources (4) and second receivers (12) for receiving further client signals from the further client systems (3) and screens (13) for displaying video information derived from the video signals and further client information derived from the further client signals and storing means (14,15,54) for storing the signals are provided with detecting means (16,17,56) for detecting highlights in the video information and for in response to a detection informing the storing means (14,15,54). The detecting means (16,17,56) detect client parameters in client signals, client parameters of clients and video parameters in video signals. Network systems (5) comprising network receivers (51) for receiving client signals from the client systems (2,3) and network transmitters (52) for transmitting client signals to the client systems (2,3) are located between the client systems (2,3).

## Description

The invention relates to an interactive video communication system, which interactive video communication system comprises
- a client system comprising a transmitter for transmitting a client signal to a further client system, a first receiver for receiving a video signal from a source and a second receiver for receiving a further client signal from the further client system, and a screen for displaying video information derived from the video signal and for displaying further client information derived from the further client signal, and
- storing means for storing at least one signal.

The screen for example forms part of a television or a monitor, the transmitter and the receivers for example form part of a set top box or a personal computer, and the storing means for example form part of a video recorder, a personal computer or a personal video recorder.

A prior art interactive video communication system is known from US 2002/0144273, which discloses in its Figure 1 a client device (a client system) comprising a network interface (a transmitter) for transmitting an icon signal (a client signal) to an other client device (a further client system), a television receiver (a first receiver) for receiving a video signal from a source and the network interface (a second receiver) for receiving a further icon signal (a further client signal) from the other client device (the further client system), a display unit (a screen) for displaying video information derived from the video signal and for displaying further icon information (further client information) derived from the further icon signal, and storage modules (storing means) in the client device and in a network device for storing the video signal.

The known interactive video communication system is disadvantageous, inter alia, owing to the following. Sometimes, a client will be relatively busy with several relatively simultaneous actions. The client must watch the video information and must watch the further client information and must operate his/her client system. To reduce the busyness of the client, the known interactive video communication system offers the client the possibility to pause the video information for himself/herself as well as for the further client. This is a relatively non-advanced solution: in case one client is too busy and decides to pause the video information, all clients must wait.

It is an object of the invention, inter alia, to provide an interactive video communication system as defined above which interactive video communication system is relatively advanced.

The interactive video communication system according to the invention is characterized in that the interactive video communication system further comprises
- detecting means for detecting a highlight in the video information and for in response to a detection informing the storing means.

By providing the interactive video communication system with the detecting means, one or more highlights are detected and in response to one or more detections the storing means are informed. In other words, one or more links are created between for example the stored video information on the one hand and the one or more highlights on the other hand. As a result, a client no longer needs to pause the video information, because the one or more relevant parts of the video information are marked with one or more highlight indications and can be easily found and/or reproduced at another time/date. This makes the interactive video communication system relatively advanced.

US 2004/0231003 discloses a method for informing network users of television programming viewed by other network users. US 5,936,661 discloses an interactive television game system. US 5,828,839 discloses a computer network chat room based on channel broadcast in real time. These prior art documents do not disclose detecting means for detecting a highlight in video information and for in response to a detection informing storing means in an interactive video communication system as defined above.

An embodiment of the interactive video communication system according to the invention is characterized in that the detecting means are arranged to detect a client parameter in a client signal.

In case of the client signal defining an icon, the client parameter for example comprises an indication whether this icon is a reaction to a highlight (smiling, laughing, applauding, cheering etc.) or not (crying, turning around etc.). In case of the client signal defining text, the client parameter for example comprises an indication whether this text is a reaction to a highlight (positive text, confirming text etc.) or not (negative text, denying text, etc.).

An embodiment of the interactive video communication system according to the invention is characterized in that the detecting means are arranged to detect a client parameter of a client.

In case of the client being monitored for generating a monitoring result (heart beat, blood pressure, skin resistance etc.), the client parameter for example comprises an indication whether the client has experienced a highlight (higher heart beat, higher blood pressure, lower skin resistance etc.) or not (lower heart beat, lower blood pressure, higher skin resistance etc.).

An embodiment of the interactive video communication system according to the invention is characterized in that the detecting means are arranged to detect a video parameter in the video signal.

In case of the video signal comprising a video part and an audio part, the video parameter for example comprises an indication whether the video signal is showing a highlight (football audience is standing up and making noise etc.) or not (football audience keeps on sitting and does not make noise etc.). The video parameter can in addition or alternatively be represented by or be derived from imbedded metadata. This metadata can for example be embedded at the source.

Generally, the detecting means will comprise and/or will be coupled to comparing means for comparing a parameter with a threshold and for in response to a first/second comparing result generating a first/second detecting result.

An embodiment of the interactive video communication system according to the invention is characterized in that the detecting means are arranged to inform the storing means in response to a confirmation from a client.

By interrupting the informing of the storing means to allow the client to give his/her approval to the informing of the storing means or not, the client has got more supervision. The user may define whether this confirmation option is to be activated or not and may define for which kind of information this confirmation option is to be used.

An embodiment of the interactive video communication system according to the invention is characterized in that the storing means are arranged to store the signal by overwriting a part of the signal stored during a time interval with a next part of the signal to be stored during a next time interval and in that the detecting means are arranged to inform the storage means for controlling the overwriting.

By letting the detecting means control the overwriting, highlights are no longer overwritten, where non-highlights are overwritten.

An embodiment of the interactive video communication system according to the invention is characterized in that the storing means are arranged to store the client signals.

By storing the client signals, instead of storing the video signal and/or in addition to storing the video signal, these client signals can be easily reproduced at another time/date.

An embodiment of the interactive video communication system according to the invention is characterized in that the interactive video communication system further comprises
- a network system comprising a network receiver for receiving the client signal from the client system and for receiving the further client signal from the further client system, and a network transmitter for transmitting the client signal to the further client system and for transmitting the further client signal to the client system.

By providing the interactive video communication system with the network system, more services can be offered.

An embodiment of the interactive video communication system according to the invention is characterized in that the network system comprises the storing means and/or the detecting means.

By providing the network system with the storing means and/or the detecting means,
the client system is kept simple. The storing means may store for each client individually or for a group of clients. The detecting means may detect for each client individually or for a group of clients.

An embodiment of the interactive video communication system according to the invention is characterized in that the storing means comprise a recorder located in the client system.

By providing the client system with the storing means, the client does not need to go into the network for storing purposes.

An embodiment of the interactive video communication system according to the invention is characterized in that the detecting means comprise a detector located in the client system.

By providing the client system with the detecting means, the client does not need to go into the network for detecting purposes.

The invention also relates to a client system for use in the interactive video communication system as defined above, which client system according to the invention is characterized in that the client system further comprises the detecting means for detecting a highlight in the video information and for in response to a detection informing the storing means.

The invention also relates to a network system for use in the interactive video communication system as defined above, which network system according to the invention is characterized in that the network system comprises a network receiver for receiving the client signal from the client system and for receiving the further client signal from the further client system, a network transmitter for transmitting the client signal to the further client system and for transmitting the further client signal to the client system, and the detecting means for detecting a highlight in the video information and for in response to a detection informing the storing means.

The invention also relates to detecting means for use in the interactive video communication system as defined above, which detecting means are arranged to detect a highlight in the video information and are arranged to inform the storing means in response to a detection.

The invention also relates to storing means for use in the interactive video communication system as defined above, which storing means are arranged to store the signal and are arranged to be informed by the detecting means in response to a detection.

The invention also relates to an interactive video communication method, which interactive video communication method comprises the steps of
- at a client system, transmitting a client signal to a further client system,
receiving a video signal from a source and receiving a further client signal from the further client system, and displaying video information derived from the video signal and displaying further information derived from the further client signal, and
- storing at least one signal,
which interactive video communication method according to the invention is characterized in that the method further comprises the step of
- detecting a highlight in the video information and in response to a detection informing the step of storing.

Embodiments of the network system according to the invention and of the client system according to the invention and of the detecting means according to the invention and of the storing means according to the invention and of the interactive video communication method according to the invention correspond with the embodiments of the interactive video communication system according to the invention.

The invention is based upon an insight, inter alia, that parts of an interactive video communication may be more interesting than other parts, and is based upon a basic idea, inter alia, that highlights are to be detected automatically.

The invention solves the problem, inter alia, to provide an interactive video communication system as defined above which interactive video communication system is relatively advanced, and is advantageous, inter alia, in that its clients are more supported.

These and other aspects of the invention will be apparent from and elucidated with reference to the embodiments(s) described hereinafter.
Fig. 1 shows diagrammatically an interactive video communication system according to the invention comprising a client system according to the invention,
Fig. 2 shows diagrammatically an interactive video communication system according to the invention comprising a client system according to the invention and a network system according to the invention,
Fig. 3 shows diagrammatically an interactive video communication system according to the invention comprising a client system according to the invention and a network system according to the invention, and
Fig. 4 shows diagrammatically detecting means according to the invention and storing means according to the invention.

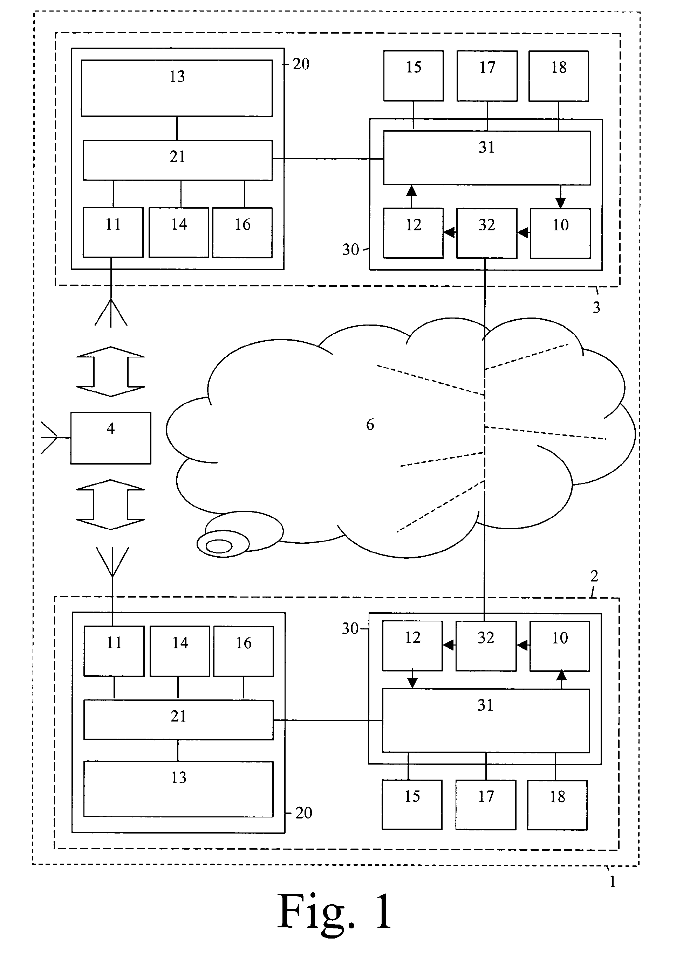

In Fig. 1 an interactive video communication system 1 according to the invention is diagrammatically shown. The interactive video communication system 1 comprises a client system 2 according to the invention and comprises a further client system 3 according to the invention. Each one of the client systems 2,3 comprises a video unit 20 and a network unit 30. The video unit 20 for example comprises a television or a monitor, and the network unit 30 for example comprises a set top box or a personal computer. The video unit 20 comprises a first receiver 11 for receiving a video signal from a source 4 such as a video station and for example further comprises first storing means 14 and first detecting means 16. The first receiver 11, the first storing means 14 and the first detecting means 16 are coupled to a processing and/or interfacing circuit 21, which is further coupled to a screen 13. The network unit 30 comprises a transmitter 10 for transmitting a client signal to the further client system 3. Thereto, the transmitter 10 is coupled to an interface 32, which is coupled via a network 6 to the further client system 3 and which is further coupled to a second receiver 12 for receiving a further client signal from the further client system 3 via the interface 32. The transmitter 10 and the second receiver 12 are further coupled to a processing and/or interfacing circuit 31, which is for example further coupled to second storing means 15 and to second detecting means 17 and to a unit 18. The processing and/or interfacing circuit 31 is further coupled to the processing and/or interfacing circuit 21.

In a prior art situation, such as disclosed in US 2002/0144273, the detecting means 16,17 are not present. The client signal and the further client signal each comprise and/or define an icon signal which is displayed on the screen 13 together with the video signal, either by superimposing the client signal on the video signal or by allocating one part of the screen 13 to the client signal and an other part of the screen 13 to the video signal. This known interactive video communication system is disadvantageous, inter alia, owing to the fact that a client is not supported in case several relatively simultaneous actions need to be performed by this client. The client must watch the video information and must watch the further client information and must operate his/her client system.

According to the invention, the interactive video communication system is made more advanced by introducing the detecting means 16 and/or 17. These detecting means 16 and/or 17 detect one or more highlights in the video information and in response to one or more detections inform the storing means 14 and/or 15. This way, one or more links are created between for example the stored video information on the one hand and the one or more highlights on the other hand. As a result, the one or more relevant parts of the video information are marked with one or more highlight indications and can be easily found and/or reproduced at another time/date. This makes the interactive video communication system 1 more advanced.

The detecting of the highlights in the video information can be done indirectly by detecting one or more client parameters in (or of) one or more client signals or by detecting one or more client parameters of one or more clients or can be done directly by detecting one or more video parameters in (or of) the video signal (within a predefined time interval). In case of the client signal defining an icon, the client parameter for example comprises an indication whether this icon is a reaction to a highlight (smiling, laughing, applauding, cheering etc.) or not (crying, turning around etc.). In case of the client signal defining text, the client parameter for example comprises an indication whether this text is a reaction to a highlight (positive text, confirming text etc.) or not (negative text, denying text, etc.). In case of the client being monitored for generating a monitoring result (heart beat, blood pressure, skin resistance etc.), the client parameter for example comprises an indication whether the client is experiencing a highlight (higher heart beat, higher blood pressure, lower skin resistance etc.) or not (lower heart beat, lower blood pressure, higher skin resistance etc.). In case of the video signal comprising a video part and an audio part, the video parameter for example comprises an indication whether the video signal is showing a highlight (football audience is standing up and making noise etc.) or not (football audience keeps on sitting and does not make noise etc.).

The detecting means 16 and/or 17 may be arranged to inform the storing means 14 and/or 15 in response to a confirmation from a client. By interrupting the informing of the storing means 14 and/or 15 to allow the client to give his/her approval to the informing of the storing means 14 and/or 15 or not, the client has got more supervision. Thereto, the client may use a remote control for controlling the video unit 20 and/or the network unit 30.

The storing means 14 and/or 15 may be arranged to store the signal by overwriting a part of the signal stored during a time interval with a next part of the signal to be stored during a next time interval and the detecting means 16 and/or 17 may be arranged to inform the storage means 14 and/or 15 for controlling the overwriting. By letting the detecting means 16 and/or 17 control the overwriting, highlights are no longer overwritten, where non-highlights are overwritten.

The storing means 14 and/or 15 may be arranged to store the client signals. By storing the client signals, per client and/or for all clients and/or in combination with the video signal, these client signals can be easily reproduced at another time/date, and a client may for example decide to watch either the video signal highlights or the combination of the video signal highlights accompanied by the client signals or the client signals solely.

The storing means 14 and/or 15 may comprise a recorder located in the client system 2,3, to avoid that the client needs to go into the network 6 for storing purposes. The detecting means 16 and/or 17 may comprise a detector located in the client system 2,3 to avoid that the client needs to go into the network 6 for detecting purposes.

The storing means 14 and the detecting means 16 may form part of the video unit 20 or not, and the storing means 15 and the detecting means 17 may form part of the network unit 30 or not. Any combination of one or more of the storing means 14,15 and one or more of the detecting means 16,17 is possible.

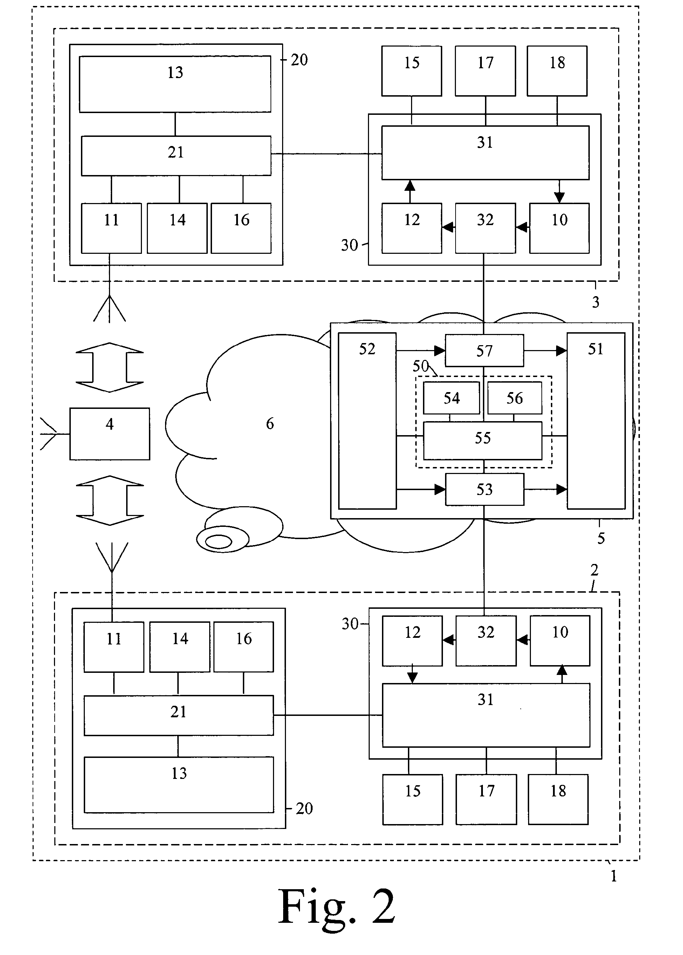

In Fig. 2 an interactive video communication system 1 according to the invention is diagrammatically shown, which corresponds with the interactive video communication system 1 shown in Fig. 1, apart from the following. In Fig. 2, the interactive video communication system 1 according to the invention further comprises a network system 5 located in the network 6. This network system 5 comprises a network receiver 51 for receiving the client signal from the client system 2 and for receiving the further client signal from the further client system 3 and a network transmitter 52 for transmitting the client signal to the further client system 3 and for transmitting the further client signal to the client system 2. Thereto, the network receiver 51 and the network transmitter 52 are coupled via an interface 53 to the client system 2 and via an interface 57 to the further client system 3. The network system 5 further comprises a controlling unit 50 for controlling the network receiver 51 and the network transmitter 52 and the interfaces 53 and 57. This controlling unit 50 comprises a processing and/or interfacing circuit 55 and may further comprise third storing means 54 and/or third detecting means 56. The third storing means 54 may have a similar function as the first/second storing means 14/15, and the third detecting means 56 may have a similar function as the first/second detecting means 16/17. Any combination of one or more of the storing means 14,15,54 and one or more of the detecting means 16,17,56 is possible.

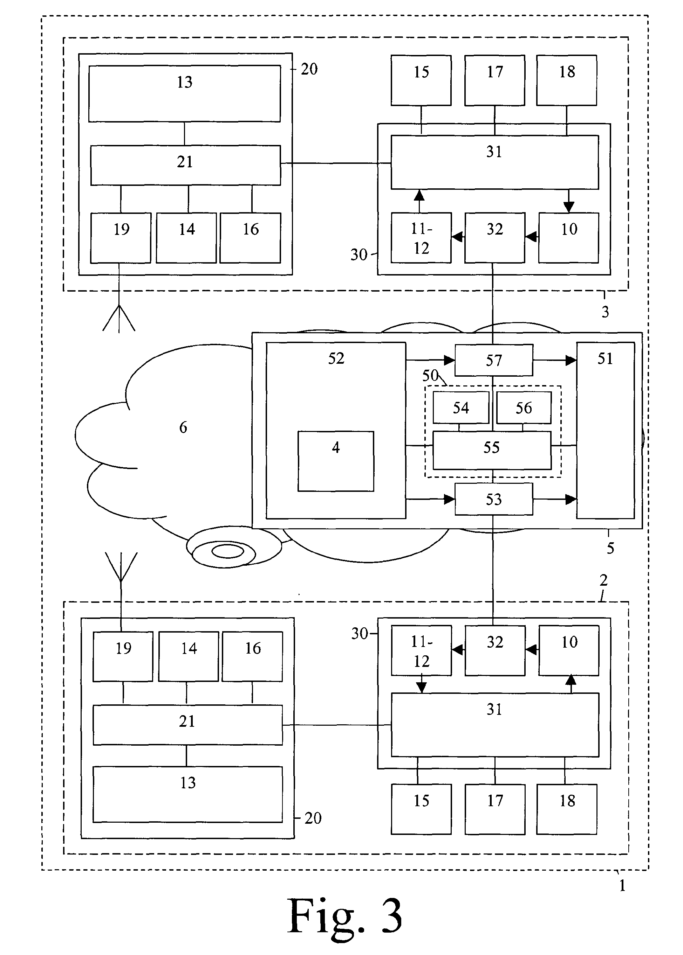

In Fig. 3 an interactive video communication system 1 according to the invention is diagrammatically shown, which corresponds with the interactive video communication system 1 shown in Fig. 2, apart from the following. In Fig. 3, the network system 5 further comprises the source 4, for example in the form of a part of the network transmitter 52. As a result, in the client systems 2,3, the second receiver 12 may comprise the first receiver 11, owing to the fact that both the video signal as well as the client signals arrive via the same connection. In the video units 20, the first receivers 11 are therefore replaced by the units 19.

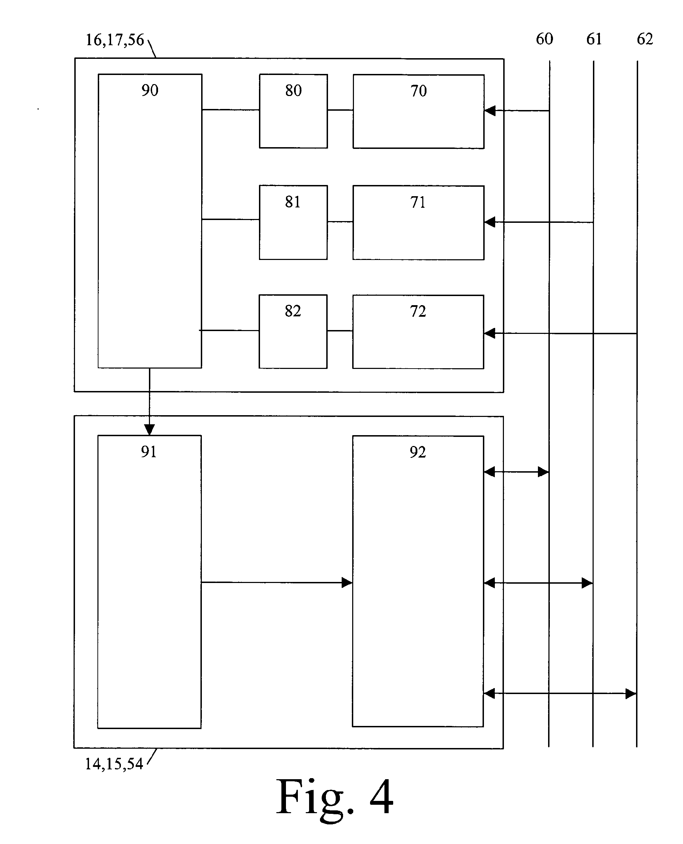

In Fig. 4 detecting means 16,17,56 according to the invention and storing means 14,15,54 according to the invention are shown diagrammatically. The detecting means 16,17,56 comprise a client parameter detector 70 coupled to a bus 60 for detecting client parameters in client signals flowing via the bus 60. The detecting means 16,17,56 further comprise a client parameter detector 71 coupled to a bus 61 for detecting client parameters of clients connected to equipment coupled to the bus 61 for supplying these client parameters. The detecting means 16,17,56 further comprise a video parameter detector 72 coupled to a bus 62 for detecting video parameters in the video signals flowing via the bus 62. The client parameter detector 70 is coupled to a comparator 80 for comparing the client parameters with thresholds and in response to a first/second comparison result generating a first/second detecting result. The client parameter detector 71 is coupled to a comparator 81 for comparing the client parameters with thresholds and in response to a first/second comparison result generating a first/second detecting result. The video parameter detector 72 is coupled to a comparator 82 for comparing the video parameters with thresholds and in response to a first/second comparison result generating a first/second detecting result. The comparators 80-82 are coupled to a controller 90, which is coupled to a controller 91 of the storing means 14,15,54. These storing means 14,15,54 further comprise a storage medium 92 coupled to the controller 91 and to the buses 60-62.

Further instead of the single input thresholds, multiple input thresholds may be used. A rule engine might take into account that several indications coming from icon messages and from noise from the viewers etc. will be combined into for example one input. Further, all inputs coming in during a certain time periode may be taken into account. Thereto, different rules may be used. This rule engine can have rules that will change when users accept highlights or propose highlights manually. The rule engine might learn from a behaviour of one or more users and/or from a proposal from one or more users.

Under control of the controller 91, the storage medium 92 marks or does not mark parts of the video signals with highlight indications and/or does not overwrite or overwrites parts of the video signals. The video signals may be stored solely and/or may be stored separately from a storage of the client signals and/or may be stored in combination with the client signals. Each detecting means 16,17,56 may comprise all detectors 70-72 and all comparators 80-82 or just some of them, in which case communication between the detecting means 16,17,56 may be necessary. Each storing means 14,15,54 may store all kinds of signals of just some of them, in which case communication between the storing means 14,15,54 may be necessary. The buses 60-62 may alternatively form part of one bus, or the buses 60 and 62 may form part of one bus, with the bus 61 forming an other bus. Other (kinds of) connections are not to be excluded. The thresholds used by the comparators 80-82 may be adjustable by one or more clients and/or may be automatically adjusted. Communication between the comparators 80-82 is not to be excluded. The controller 90 may have an arbiter function to overrule contradictory decisions with respect to different kinds of signals (for example in case the video signals clearly indicate a highlight where the client signals at the same time clearly indicate a non-highlight) and/or to decide for non-unanimous decisions for majorities/minorities of clients (within a predefined time interval).

The client parameter detector 70 for example detects one or more client parameters of the client signals. In case of the client signal comprising a face of the client or a face&body of the client having several expressions, then the face or the face&body does not need to be transmitted all the time, it needs to be exchanged only once and can be stored. After that, only the expressions needs to be exchanged, for example in the form of codes. The client parameter detector 70 will then detect such codes. Otherwise the client parameter detector 70 must detect the entire signal and extract the relevant part of it. The client parameter detector 71 for example detects one or more client parameters of the client. These client parameters will usually in the form of codes to be detected by the client parameter detector 71. The video parameter detector 72 for example detects a video movement of a large part of the video signal with respect to a smaller part of the video signal which does not represent a movement (football audience is standing up etc.) and for example detects an audio increase of an audio signal forming part of the video signal (football audience is making noise etc.).

The screen 13 can be any kind of screen. Usually, the video signal and the further client signal from a further client will be displayed simultaneously to a client, possibly his/her own client signal may be displayed simultaneously as well. The network 6 can be any kind of network (internet, telephone, cable, satellite etc.). A further network may be involved, for example via the unit 18 being a further network interface. The storing means 14 (15) (54) and the detecting means 16 (17) (56) may be integrated into one means 14+16 (15+17) (54+56).

The expression "for" in for example "for transmitting", "for receiving", "for displaying", "for storing", "for detecting" etc. does not exclude that other functions are performed as well, simultaneously or not. The expressions "X coupled to Y" and "a coupling between X and Y" and "coupling/couples X and Y" etc. do not exclude that an element Z is in between X and Y. The expressions "P comprises Q" and "P comprising Q" etc. do not exclude that an element R is comprised/included as well. The terms "a" and "an" do not exclude the possible presence of one or more pluralities.

The steps of transmitting, receiving, storing and detecting do not exclude further steps, such as for example the steps described for the Figures.

## Claims

1. Interactive video communication system (1), which interactive video communication system (1) comprises
- a client system (2) comprising a transmitter (10) for transmitting a client signal to a further client system (3), a first receiver (11) for receiving a video signal from a source (4) and a second receiver (12) for receiving a further client signal from the further client system (3), and a screen (13) for displaying video information derived from the video signal and for displaying further client information derived from the further client signal, and
- storing means (14,15,54) for storing at least one signal,
**characterized in that** the interactive video communication system (1) further comprises
- detecting means (16,17,56) for detecting a highlight in the video information and for in response to a detection informing the storing means (14,15,54).

2. Interactive video communication system (1) as defined in claim 1, **characterized in that** the detecting means (16,17,56) are arranged to detect a client parameter in a client signal.

3. Interactive video communication system (1) as defined in claim 1 or 2, **characterized in that** the detecting means (16,17,56) are arranged to detect a client parameter of a client.

4. Interactive video communication system (1) as defined in claim 1, 2 or 3, **characterized in that** the detecting means (16,17,56) are arranged to detect a video parameter in the video signal.

5. Interactive video communication system (1) as defined in claim 1, 2, 3 or 4, **characterized in that** the detecting means (16,17,56) are arranged to inform the storing means (14,15,54) in response to a confirmation from a client.

6. Interactive video communication system (1) as defined in claim 1, 2, 3, 4 or 5, **characterized in that** the storing means (14,15,54) are arranged to store the signal by overwriting a part of the signal stored during a time interval with a next part of the signal to be stored during a next time interval and **in that** the detecting means (16,17,56) are arranged to inform the storage means (14,15,54) for controlling the overwriting.

7. Interactive video communication system (1) as defined in claim 1, 2, 3, 4, 5 or 6, **characterized in that** the storing means (14,15,54) are arranged to store the client signals.

8. Interactive video communication system (1) as defined in claim 1, 2, 3, 4, 5, 6 or 7, **characterized in that** the interactive video communication system (1) further comprises
- a network system (5) comprising a network receiver (51) for receiving the client signal from the client system (2) and for receiving the further client signal from the further client system (3), and a network transmitter (52) for transmitting the client signal to the further client system (3) and for transmitting the further client signal to the client system (2).

9. Interactive video communication system (1) as defined in claim 8, **characterized in that** the network system (5) comprises the storing means (54) and/or the detecting means (56).

10. Interactive video communication system (1) as defined in claim 1, 2, 3, 4, 5, 6, 7 or 8, **characterized in that** the storing means (14,15) comprise a recorder located in the client system (2).

11. Interactive video communication system (1) as defined in claim 1, 2, 3, 4, 5, 6, 7 or 8, **characterized in that** the detecting means (16,17) comprise a detector located in the client system (2).

12. Client system (2) for use in the interactive video communication system (1) as defined in claim 1, **characterized in that** the client system (2) further comprises the detecting means (16,17) for detecting a highlight in the video information and for in response to a detection informing the storing means (14,15,54).

13. Network system (5) for use in the interactive video communication system (1) as defined in claim 1, **characterized in that** the network system (5) comprises a network receiver (51) for receiving the client signal from the client system (2) and for receiving the further client signal from the further client system (3), a network transmitter (52) for transmitting the client signal to the further client system (3) and for transmitting the further client signal to the client system (2), and the detecting means (56) for detecting a highlight in the video information and for in response to a detection informing the storing means (14,15,54).

14. Detecting means (16,17,56) for use in the interactive video communication system (1) as defined in claim 1, which detecting means (16,17,56) are arranged to detect a highlight in the video information and are arranged to inform the storing means (14,15,54) in response to a detection.

15. Storing means (14,15,54) for use in the interactive video communication system (1) as defined in claim 1, which storing means (14,15,54) are arranged to store the signal and are arranged to be informed by the detecting means (16,17,56) in response to a detection.

16. Interactive video communication method, which interactive video communication method comprises the steps of
- at a client system (2), transmitting a client signal to a further client system (3), receiving a video signal from a source (4) and receiving a further client signal from the further client system (3), and displaying video information derived from the video signal and displaying further information derived from the further client signal, and
- storing at least one signal,
**characterized in that** the method further comprises the step of
- detecting a highlight in the video information and in response to a detection informing the step of storing.
